# EUROPEAN PATENT APPLICATION

(11) **EP 4 624 678 A1**
(43) Date of publication of application: **01.10.2025**
(21) Application number: 24222796.5
(22) Date of filing: 23.12.2024
(51) Int. Cl.: E02F 9/08, B60R 16/04

(54) **WORKING VEHICLE**

(30) Priority: 29.03.2024 JP 2024057113
(71) Applicant: Takeuchi MFG. Co., Ltd., Hanishina-gun, Nagano 389-0605 (JP)
(72) Inventor: Shioiri, Yuichi, Nagano 389-0605 (JP); Tanaka, Kenichi, Nagano 389-0605 (JP)
(74) Representative: Liesegang, Eva

(57) **Abstract**

Provided is a working vehicle that includes a power source socket that can prevent the arrangement of a plug and a wiring that are connected to a power source socket at a place where an operator gets on or off the working vehicle and a place where a machine operation is performed. A working vehicle includes: a bracket disposed on a side of an operator seat; and a power source socket that is supported on the bracket. An insertion port of the power source socket is disposed so as to be directed toward a rear side of the working vehicle.

## Description

### [Technical Field]

The present invention relates to a working vehicle.

### [Background Art]

In a field of a working vehicle such as a construction machine, there is a case where the working vehicle includes a power source socket for supplying electricity to an electric equipment such as a beacon lamp or a light that a user mounts. The power source socket may be also used for the purpose of charging electricity to a tablet terminal or a smartphone. Patent document JP-A-2021-102391 discloses a working vehicle that includes a power supply socket (a power supply facility) in a cabin.

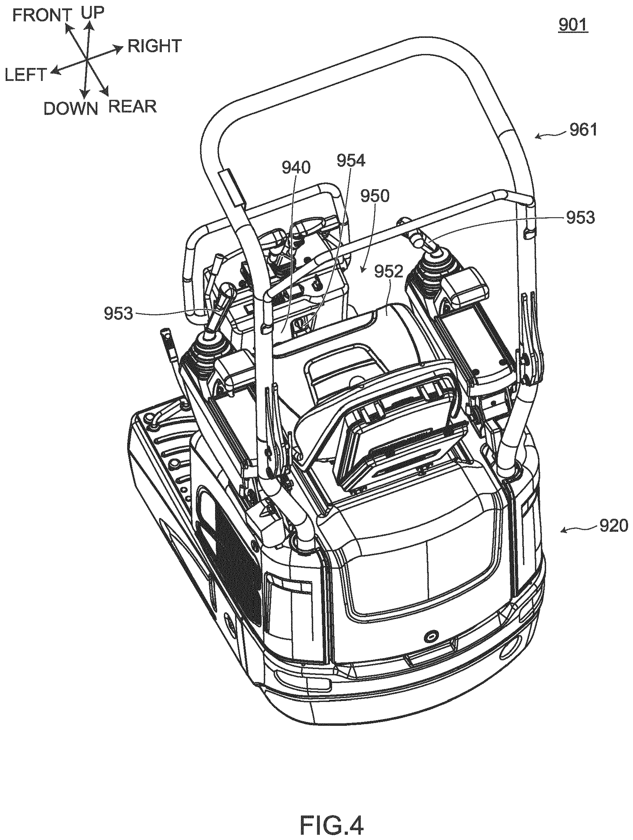

Fig. 4 is a view for illustrating a power source socket 954 that the working vehicle 901 according to the prior art includes. The working vehicle 901 is a crawler type hydraulic excavator that includes a work device not illustrated in the drawing. The working vehicle 901 includes: a lower traveling body not illustrated in the drawing; an upper slew body 920 that is mounted on an upper portion of the lower traveling body in a slewable manner; and the work device that is mounted on a front portion of the upper slew body 920.

A canopy type cabin 950 is mounted on the upper slew body 920. In the cabin 950, a front panel 940, an operator seat 952, an operating lever 953, a power source socket 954 and a canopy pole 961 are disposed. The power source socket 954 is disposed on the front panel 940.

The power source socket 954 can be used for the purpose of charging electricity a tablet terminal or a smartphone. Further, the power source socket 954 can supply electricity to electric equipment such as a beacon lamp that a user mounts, an additional mounted light and the like.

### [Citation List]

### [Patent document]

[Patent document 1] JP-A-2021-102391

### [Summary of Invention]

### [Technical Problem]

However, in the working vehicle 901 relating to the above-mentioned prior art, the power source socket 954 is disposed on the front panel 940. Accordingly, in a case where an operator gets on or off the working vehicle 901 while keeping a plug inserting into the power source socket 954, the plug and electric wiring not illustrated in the drawing become obstacles and thus giving rise to a drawback that getting on and off of the operator from the working vehicle 901 is obstructed.

Further, the operator, the plug and the electric wiring interfere with each other thus giving rise to a drawback that the operation of the working vehicle 901 is obstructed.

In view of the above-mentioned circumstances, the present invention has been made to overcome such drawbacks, and it is an object of the present invention to provide a working vehicle that includes a power source socket that can prevent the arrangement of a plug or a wiring that is connected to a power source socket at a place where an operator gets on or off the working vehicle and a place where a machine operation is performed.

### [Solution to problem]

[1] A working vehicle according to this disclosure includes a bracket disposed on a lateral side of an operator seat; and a power source socket that is supported on the bracket. An insertion port of the power source socket is disposed so as to be directed toward a rear side of the working vehicle.
[2] In the working vehicle according to this disclosure, the working vehicle further includes an armrest. It is preferred that the armrest is disposed above the bracket.
[3] In the working vehicle according to this disclosure, it is preferred that the power source socket includes: a right-side power source socket that is disposed on a right side of the operator seat; and a left-side power source socket that is disposed on a left side of the operator seat.
[4] In the working vehicle according to this disclosure, it is preferred that the working vehicle of this disclosure further includes: a canopy pole that is disposed upright behind the operator seat; and a mounting seat that is disposed on the canopy pole, wherein an electric equipment is mounted on the mounting seat.
[5] In the working vehicle according to this disclosure, it is preferred that the mounting seat includes a threaded portion for mounting the electric equipment, and the threaded portion includes a male thread or a female thread.
[6] In the working vehicle according to this disclosure, it is preferred that the mounting seat is mounted on the canopy pole by welding.
[7] In the working vehicle according to this disclosure, it is preferred that the electric equipment is a beacon lamp or a light.

### [Advantageous effect of the Invention]

The working vehicle of the present invention includes the bracket disposed on the lateral side of the operator seat; and the power source socket that is supported on the bracket. The insertion port of the power source socket is disposed so as to be directed toward the rear side of the working vehicle. The insertion port of the power source socket is disposed so as to be directed toward the rear side of the working vehicle and hence, when a plug of an electric equipment is inserted into the insertion port, electric wiring that is connected to the plug is disposed toward the rear side of the working vehicle from the position on the side of the operator seat.

As a result, when an operator gets on or off the working vehicle, it is possible to prevent the electric wiring from obstructing the getting on and off of the operator from the working vehicle. Further, when the operator operates the working vehicle, it is possible to prevent the electric wiring from interfering with the operator and from obstructing the operation performed by the operator.

That is, according to the working vehicle of the present invention, it is possible to provide the working vehicle that can prevent the plug connected to the power source and the electric wiring from being arranged at the place where the operator gets on or off the working vehicle and at the place where a machine operation is performed.

### [Brief Description of Drawings]

Fig. 1 is a view illustrating a working vehicle 1 according to an embodiment, and is an external appearance perspective view of the working vehicle 1 as viewed from an oblique front side.
Fig. 2 is a view illustrating the working vehicle 1 according to the embodiment, and is an external appearance perspective view of the working vehicle 1 as viewed from an oblique rear side.
Fig. 3 is a view illustrating a power source socket 54 that the working vehicle 1 according to the embodiment includes.
Fig. 4 is a view illustrating a power source socket 954 that a working vehicle according to the prior art includes.

### [Description of embodiments]

Hereinafter, a mode for carrying out the present invention (hereinafter, referred to as "embodiment") is described. The embodiment described hereinafter is a preferred mode for carrying out the invention, and does not limit the present invention relating to claims. Further, it is always not the case that all of various components and all of the combinations of these components described in the embodiment are indispensable in the present invention.

### 1. Working vehicle

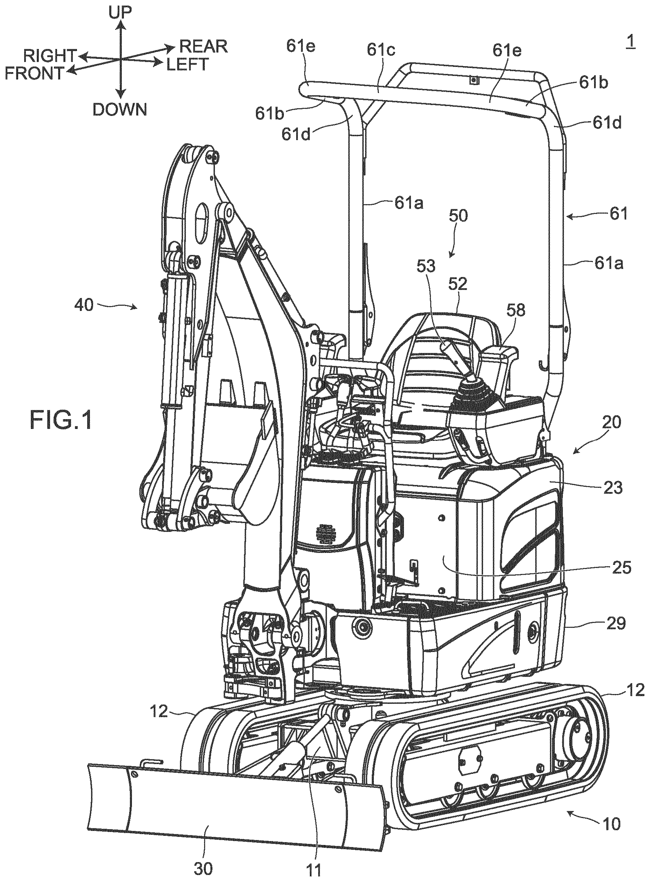

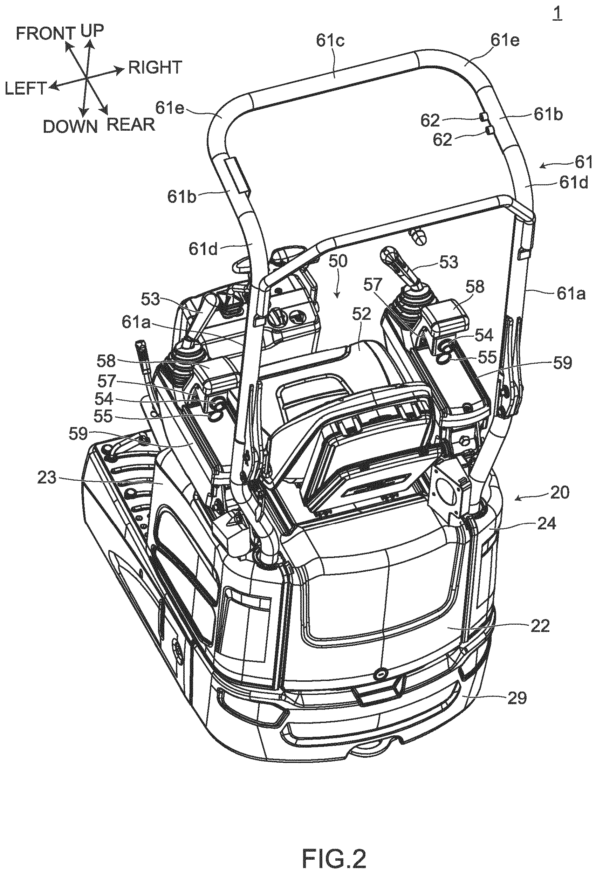

Hereinafter, a working vehicle according to an embodiment 1 of the present invention is described with reference to drawings. In the embodiment described hereinafter, as an example of the working vehicle 1, a crawler-type hydraulic excavator is described. First, the external appearance configuration of the working vehicle 1 according to the embodiment is described with reference to Fig. 1 and Fig. 2. The external configuration of the working vehicle 1 according to the embodiment does not constitute the gist of the present invention and hence, such an external appearance configuration is described only schematically.

Further, in a case where it is necessary to indicate the left and the right, the front and the rear and the up and the down of the working vehicle 1 in describing the working vehicle 1 according to the embodiment, a side of the working vehicle 1 where a blade 30 is mounted is set as "front", a side opposite to the side where the blade 30 is mounted is set as "rear". Further, a side of a left side surface of the working vehicle 1 as viewed from a rear side of the working vehicle 1 is set as "left", and in the same manner, a side of a right side surface of the working vehicle 1 when the working vehicle 1 is viewed from a rear side is set as "right". Further, a bottom portion side of the working vehicle 1 is set as "down", and a side opposite to the bottom portion is set as "up".

Fig. 1 is a view illustrating the working vehicle 1 according to the embodiment, and is an external perspective view of the working vehicle 1 as viewed from an oblique front side. Fig. 2 is a view illustrating the working vehicle 1 according to the embodiment, and is an external perspective view of the working vehicle 1 as viewed from an oblique rear side. In Fig. 2, the description of a lower traveling body 10, the blade 30 and a work device 40 is omitted.

As illustrated in Fig. 1, the working vehicle 1 includes: the lower traveling body 10; an upper slew body 20 that is slewably mounted on an upper portion of the lower traveling body 10; the blade 30 that is mounted on a front portion of the lower traveling body 10; and the work device 40 mounted on a front portion of the upper slew body 20.

The lower traveling body 10 includes a pair of left and right crawlers 12 on both left and right sides of the frame 11. The blade 30 that is vertically swingable is mounted on the frame 11. Further, a slewing mechanism (not illustrated in the drawing) is disposed at a substantially center portion of an upper portion of the frame 11. The upper slew body 20 can be slewed on a horizontal plane by a slewing mechanism. The lower traveling body 10, the upper slew body 20, the blade 30 and the work device 40 described above are driven by corresponding hydraulic actuators (hydraulic motors, hydraulic cylinders and the like) respectively.

An upper surface, a rear surface, a left side surface, a right side surface and a front surface of the upper slew body 20 are covered by covers respectively. A region covered by the covers constitute an equipment housing compartment (symbol being omitted). In this case, the covers that cover an upper surface and a rear surface of the equipment housing compartment are referred to as a battery cover 22, the covers that cover a left side surface, a right side surface and a front surface of the equipment housing compartment are respectively referred to as a left side surface cover 23, a right side surface cover 24 (see Fig. 2) and a front surface cover 25.

A canopy type cabin 50 is mounted on the equipment housing compartment. In the cabin 50, a canopy pole 61, an operator seat 52, and an operation lever 53 are disposed. A counterweight 29 (see Fig. 2) that forms a portion of a rear surface is disposed on a lower portion of a rear surface of the upper slew body 20. The canopy pole 61 is described later.

### 2. Power source socket

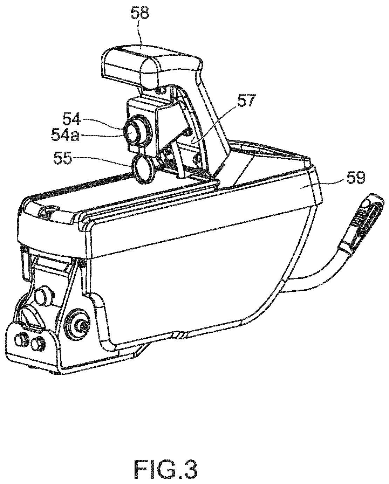

As illustrated in Fig. 2 and Fig. 3, the working vehicle 1 includes power source sockets 54 and brackets 57. Fig. 3 is a view illustrating the power source socket 54 that the working vehicle 1 according to the embodiment includes.

The brackets 57 are disposed on lateral sides of the operator seat 52. In the working vehicle 1 according to the embodiment, the brackets 57 are disposed on a left side and a right side of the operator seat 52 respectively.

The bracket 57 disposed on the left side of the operator seat 52 is mounted upright above a console 59 mounted on the battery cover 22. The bracket 57 disposed on the right side of the operator seat 52 is mounted upright on a console 59 mounted on the battery cover 22.

The bracket 57 may be mounted upright on the working vehicle 1 by a suitable means, or may be fixed to the working vehicle 1. The position at which the bracket 57 is mounted upright is not particularly limited as long as the position is disposed on the lateral side of the operator seat 52. The bracket 57 may be disposed upright from the battery cover 22, the left side cover 23 or the right side cover 24 on the side of the operator seat 52, for example.

The power source sockets 54 are disposed on the sides of the operator seat 52. Further, the power source sockets 54 are supported by the brackets 57. The power source socket 54 has an insertion port 54a into which a plug (not illustrated in the drawing) of an electric equipment is inserted. The insertion port 54a is disposed so as to be directed rearward with respect to the working vehicle 1.

With such a configuration, when the plug (not illustrated in the drawing) is inserted into the insertion port 54a, electric wiring (not illustrated in the drawing) connected to the plug is disposed toward a rear side of the working vehicle 1. As a result, when an operator gets on or off the working vehicle 1, it is possible to prevent the electric wiring from obstructing getting on or off of the operator from the working vehicle 1. Further, when the operator operates the working vehicle 1, it is possible to prevent the occurrence of a case where the electric wiring interferes with the operator so that the operation of the operator is obstructed.

"The insertion port 54a is disposed so as to be directed rearward with respect to the working vehicle 1" means that the insertion port 54a is disposed such that the electric wiring connected to the plug extends rearward when the plug is inserted into the insertion port 54a.

Accordingly, it is not required that the insertion port 54a is disposed so as to be directed toward a rear side with respect to the working vehicle 1 in a strict meaning of the term. For example, the insertion port 54a may be disposed in an inclined manner toward the operator seat 52, or may be disposed in an inclined manner so as to be directed toward the outside of the working vehicle 1.

With a configuration where the insertion port 54a is disposed in an inclined manner toward the operator seat 52, the working vehicle 1 has an advantageous effect that the operator who is seated on the operator seat 52 can easily insert the plug into the insertion port 54a or pulls out the plug from the insertion port 54a. On the other hand, in the configuration where the insertion port 54a is inclined toward the outside of the working vehicle 1, the electric wiring passes the position away from the operator seat 52 and hence, the possibility that the operator and the electric wiring interfere with each other can be further lowered.

In the above-mentioned configuration, "the electric equipment" includes all equipment that are used in a state where the equipment are mounted on the working vehicle 1 and are electrically operated. As the electric equipment, a light can be exemplified. It is preferred that the electric equipment is a beacon light that indicates that the working vehicle 1 is under an operation or a light that functions as illumination.

In a preferred embodiment, the power source socket 54 is disposed on the left side and the right side of the operator seat 52. The working vehicle 1 according to the embodiment includes: the left side power source socket 54 disposed on the left side of the operator seat 52; and the right side power source socket 54 disposed on the right side of the operator seat 52.

With such a configuration, when a user uses two or more electric equipment simultaneously, the user can adopt the manner of using the electric equipment where electricity is supplied to one electric equipment from the power source socket 54 on the left side, and electricity is supplied to the other electric equipment from the power source socket 54 on the right side.

Even in a case where the power source socket 54 is disposed on both left side and the right side of the working vehicle 1, in the power source socket 54 on the left side and in the power source socket 54 on the right side, the insertion port 54a is disposed so as to be directed rearward with respect to the working vehicle 1. Accordingly, the electric wiring connected to the plug is disposed toward the rear side of the working vehicle 1. With such a configuration, it is possible to prevent the plug that is connected to the power source socket 54 and the electric wiring from being disposed at the place where an operator gets on or off the working vehicle 1 or at the place where a machine operation is performed.

In a case where the number of electric equipment to which electricity is supplied is only one, by performing the supply of electricity from the power source socket 54 close to the electric equipment out of the power source socket 54 on the left side and the power source socket 54 on the right side, a length of the electric wiring to be routed in the working vehicle 1 can be shortened and, at the same time, it is possible to prevent the plug that is connected to the power source socket 54 and the electric wiring from being disposed at the place where an operator gets on or off the working vehicle 1 or at the place where a machine operation is performed.

In this manner, the power source sockets 54 include the right-side power source socket 54 disposed on the right side of the operator seat 52 and the left-side power source socket 54 disposed on the left side of the operator seat 52. Accordingly, it is possible to realize an electricity supply method that copes with various user's needs while preventing the plug that is connected to the power source socket 54 and the electric wiring from being disposed at the place where an operator gets on or off the working vehicle 1 or at the place where a machine operation is performed.

The power source socket 54 has a lid 55. The lid 55 is a lid for shutting the insertion port 54a when the power source socket 54 is not used. By shutting the insertion port 54a by the lid 55, it is possible to prevent water such as rain, sand and dirt from intruding into the power source socket 54 thus preventing the occurrence of a failure in the power source socket 54.

The working vehicle 1 includes armrests 58. The armrests 58 are disposed on a left side and a right side of the operator seat 52. The armrests 58 are disposed at a position behind the operation lever 53 in the working vehicle 1. The operator accurately operates the working vehicle 1 by operating the operating lever 53 by placing his or her arms on the armrests 58.

The armrest 58 is supported by the bracket 57. The armrest 58 is disposed above the power source socket 54. By adopting such a configuration, when an operator operates the working vehicle 1, it is possible to prevent the operator and the power source socket from interfering with each other. Further, it is possible to prevent the interference between the operator and the electric wiring. Further, it is possible to prevent rain from being directly applied to the power source socket 54.

### 3. Mounting seat for electronic equipment

As illustrated in Fig. 2, the working vehicle 1 includes the canopy pole 61 and a mounting seat 62 for the electric equipment. In the description made hereinafter, "the mounting seat 62 for the electric equipment" is simply referred to as "mounting seat 62".

The canopy pole 61 is referred to as "protective structure at the time of falling down", and has a role of protecting an operator when the working vehicle 1 falls down. The canopy pole 61 includes: pillar portions 61a that extend upward from a body frame (not illustrated in the drawing) of the working vehicle 1; first beam portions 61b that extend in the longitudinal direction of the working vehicle 1; a second beam portion 61c that extends in a vehicle width direction of the working vehicle 1; a first bent portion 61d that connects the pillar portion 61a and the first beam portion 61b; and a second bent portion 61e that connects the first beam portions 61b and the second beam portion 61c.

In the working vehicle 1 according to the embodiment, the pillar portions 61a are mounted upright from a left rear end and a right rear end of the working vehicle 1 respectively. That is, the canopy pole 61 that the working vehicle 1 includes is provided with two pillar portions 61a. Two pillar portions 61a are connected to the first beam portions 61b by way of the first bent portions 61d respectively at the predetermined height.

The first pillar portion 61a and the first beam portion 61b are connected at the first bent portion 61d such that the extending direction of the first pillar portion 61a and the extending direction of the first beam portion 61b differ from each other. The pillar portion 61a and the first beam portion 61b may be, as illustrated in Fig. 1 and Fig.2, formed by bending a pole. Alternatively, the first pillar portion 61a and the first beam portion 61b may be connected by welding such that the extending direction of the first pillar portion 61a and extending direction of the first beam portion 61b differ from each other.

The first beam portion 61b, as viewed in a plan view of the working vehicle 1, extends toward frontward from a rear side of the working vehicle 1 at a position of a left-side end portion of the cabin 50 or at a position of a right-side end portion of the cabin 50. An end portion of the first beam portion 61b on a front side of the working vehicle 1 is connected to one end portion out of two end portions of the second beam portion 61c.

The mounting seats 62 are disposed on the first beam portion 61b of the canopy pole 61. In the working vehicle 1 according to the embodiment, two mounting seats 62 are disposed on the first beam portion 61b.

The position at which the mounting seats 62 are disposed is not particularly limited. Corresponding to a type of the electric equipment to be mounted, the mounting seat 62 can be disposed on either one of the left first beam portion 61b or the right first beam portion 61b, or on both of the left first beam portion 61b and the right first beam portion 61b. Further, the number of mounting seats 62 to be disposed is not limited.

It is preferred that the mounting seats 62 is disposed inside the first beam portion 61b in the vehicle width direction of the working vehicle 1 as viewed in a plan view of the working vehicle 1. With such a configuration, it is possible to prevent a swing radius of the working vehicle 1 from becoming large.

In a case where the cabin 50 is offset toward a left side or a right side of the working vehicle 1, it is preferred to arrange the mounting seats 62 on the first beam portion 61b that is disposed at the position close to a slew center (not illustrated in the drawing) of the upper slew body 20. With such a configuration, it is possible to prevent the swing radius of the working vehicle 1 from becoming large.

The mounting seats 62 can adopt mounting seats having a desired shape provided that an electric equipment can be mounted. The mounting seat 62 may have a threaded portion for mounting the electric equipment. It is preferred that the threaded portion is formed of either a male thread or a female thread.

In Fig. 2, one example of the mounting seat 62 is illustrated. The mounting seat 62 has a circular cylindrical outer shape. One bottom surface of the circular columnar shape is fixed to the first beam portion 61b by welding. The female thread that extends in a height direction of a circular columnar shape is formed in the other bottom surface of the mounting seat 62.

As another mode of the mounting seat 62, it is possible to exemplify a mounting seat where an outer shape of the mounting seat is a polygonal columnar outer shape such as a quadrangular columnar shape or a hexagonal columnar shape, and the female thread that extends in a height direction of a polygona columnar shape is formed in the polygonal columnar mounting seat 62. A mounting seat where the female thread is formed in a rectangular plate or a mounting seat where such a rectangular plate has leg portions and the rectangular plate is welded to the first beam portion 61b by way of the legs can be also exemplified.

Further, as a still another mode of the mounting seat 62, a mounting seat where a bolt or a nut is welded to a plate or a structure where a bolt or a nut is directly welded to the first beam portion 61b can be also named as examples of the mounting seat.

With the provision of the mounting seats 62 having the above-mentioned configuration, when a user intends to mount an electric equipment such as a beacon lamp on the working vehicle 1, the user can easily fix the electric equipment using the mounting seats 62. That is, the electric equipment can be fixed to the mounting seat 62 without using a cumbersome means such as welding. Accordingly, fixing and mounting of the electric equipment to the canopy pole 61 becomes easy.

Further, in a case where the mounting seat 62 has the threaded portion for mounting an electric equipment, a user can easily fix the electric equipment to the canopy pole 61 by using the threaded portion. In a case where the threaded portion is formed of the male thread, the electric equipment can be fixed using a nut. In a case where the threaded portion is formed of the female thread, the electric equipment can be fixed by using a bolt.

Hereinafter, advantageous effects that the working vehicle 1 according the embodiment can acquire are described.
[1] The working vehicle 1 according to the embodiment includes the brackets 57 disposed on lateral sides of the operator seat 57; and the power source socket 54 that is supported on the bracket 57. The insertion port 54a of the power source socket 54 is disposed so as to be directed toward a rear side of the working vehicle 1.

With such a configuration, when the plug of the electric equipment is inserted into the insertion port 54a of the power source socket 54, the electric wiring that is connected to the plug is disposed toward the rear side of the working vehicle 1 from the position on the side of the operator seat 52. As a result, when an operator gets on or off the working vehicle 1, it is possible to prevent the electric wiring from obstructing the getting on and off of the operator from the working vehicle 1. Further, when the operator operates the working vehicle 1, it is possible to prevent the electric wiring from interfering with the operator and from obstructing the operation of the working vehicle 1 performed by the operator.

According to the working vehicle 1 of the embodiment, it is possible to provide the working vehicle 1 that can prevent the plug connected to the power source socket 54 and the electric wiring from being arranged at a place where the operator gets on or off the working vehicle 1 and at a place where a machine operation is performed.

The working vehicle 1 according to the embodiment further includes the armrests 58. The armrests 58 are disposed above the brackets 57. With such a configuration, when the operator operates the working vehicle 1, it is possible to prevent the operator and the power source socket 54 from interfering with each other. Further, it is possible to prevent the operator and the electric wiring from interfering with each other.

[3] In the working vehicle 1 according to the embodiment, the power source socket 54 includes: the right-side power source socket 54 that is disposed on the right side of the operator seat 52; and the left-side power source socket 54 that is disposed on the left-side of the operator seat 52.

With such a configuration, when a user uses two or more electric equipment simultaneously, the user can adopt the manner of using the electric equipment where electricity is supplied to one electric equipment from the power source socket 54 on the left side, and electricity is supplied to the other electric equipment from the power source socket 54 on the right side. Further, in a case where the number of electric equipment to which electricity is supplied is only one, electricity can be supplied from the power source socket 54 close to the electric equipment out of the power source socket 54 on the left side and the power source socket 54 on the right side. That is, according to the working vehicle 1 of the embodiment, it is possible to realize the electricity supply method that copes with various user's needs while preventing the plug that is connected to the power source socket 54 and the electric wiring from being disposed at the place where an operator gets on or off the working vehicle 1 or at the place where a machine operation is performed.

[4] The working vehicle 1 of this embodiment further includes: the canopy pole 61 that is disposed upright behind the operator seat 52; and the mounting seat 62 that is disposed on the canopy pole 61, wherein an electric equipment is mounted on the mounting seat 62. With such a configuration, when a user intends to fix the electric equipment on the working vehicle 1, the user can easily fix the electric equipment using the mounting seat 62 without using a cumbersome means such as welding. Accordingly, fixing and mounting of the electric equipment to the canopy pole 61 become easy.

[5] In the working vehicle 1 of the embodiment, the mounting seat 62 includes the threaded portion for mounting the electric equipment, and the threaded portion includes the male thread or the female thread. With such a configuration, by using a nut that engages with the male thread or a bolt that engages with the female thread, it is possible to easily mount the electric equipment on the mounting seat 62.

[6] In the working vehicle 1 according to this embodiment, the mounting seat 62 is mounted on the canopy pole 61 by welding. With such a configuration, the mounting seat 62 can be firmly mounted on the canopy pole 61.

[7] In the working vehicle 1 according to this embodiment, the electric equipment is a beacon lamp or a light. The working vehicle includes, as the electric equipment, the beacon lamp or the light and hence, the safety and the efficiency of the work by the working machine 1 can be enhanced.

The present invention is not limited to the embodiment described above, and various modifications are conceivable without departing from the gist of the present invention.

For example, although the working vehicle 1 where the lower traveling body 10 uses the crawler 12 as the traveling device is adopted in the embodiment described above, the present invention is not limited to such a configuration. For example, the working vehicle 1 may be a working vehicle that uses tires as the traveling device.

### [List of reference signs]

1: working vehicle
52: operator seat
54: power source socket
54a: insertion port
57: bracket
58: armrest
61: canopy pole

## Claims

1. A working vehicle comprising:
a bracket disposed on a lateral side of an operator seat; and
a power source socket that is supported on the bracket, wherein
an insertion port of the power source socket is disposed so as to be directed toward a rear side of the working vehicle.

2. The working vehicle according to claim 1, further comprising an armrest, wherein
the armrest is disposed above the bracket.

3. The working vehicle according to claim 1 or 2, wherein
the power source socket includes: a right-side power source socket that is disposed on a right side of the operator seat; and a left-side power source socket that is disposed on a left side of the operator seat.

4. The working vehicle according to one of the preceding claims, further comprising:
a canopy pole that is disposed upright behind the operator seat; and
a mounting seat that is disposed on the canopy pole, wherein an electric equipment is mounted on the mounting seat.

5. The working vehicle according to claim 4, wherein
the mounting seat includes a threaded portion for mounting the electric equipment, and
the threaded portion includes a male thread or a female thread.

6. The working vehicle according to claim 4 or 5, wherein
the mounting seat is mounted on the canopy pole by welding.

7. The working vehicle according to one of claims 4 to 6, wherein
the electric equipment is a beacon lamp or a light.
